(19) Europäisches Patentamt
European Patent Office
Office européen des brevets

(11) Veröffentlichungsnummer: **0 249 577 B1**

# (12) EUROPÄISCHE PATENTSCHRIFT

(45) Veröffentlichungstag der Patentschrift: **04.12.91**

(51) Int. Cl.⁵: **C07C 69/732**, C08K 5/13

(21) Anmeldenummer: **87810326.6**

(22) Anmeldetag: **09.06.87**

## (54) Langketten-(4-Hydroxyphenyl)propionat-Derivate als Stabilisatoren.

(30) Priorität: **12.06.86 US 873556**

(43) Veröffentlichungstag der Anmeldung:
**16.12.87 Patentblatt 87/51**

(45) Bekanntmachung des Hinweises auf die Patenterteilung:
**04.12.91 Patentblatt 91/49**

(84) Benannte Vertragsstaaten:
**DE FR GB IT NL**

(56) Entgegenhaltungen:
**US-A- 3 330 859**

**CHEMICAL ABSTRACTS, Band 103, Nr. 26, 30. Dezember 1985, Seite 40, Spalte 2, Zusammenfassungsnr. 216342f, Columbus, Ohio, US; & JP - A - 60 104 153**

**CHEMICAL ABSTRACTS, Band 103, Nr. 26, 30. Dezember 1985, Seite 40, Spalte 2, Zusammenfassungsnr. 216343g, Columbus, Ohio, US; & JP - A - 60 104 152**

(73) Patentinhaber: **CIBA-GEIGY AG**
**Klybeckstrasse 141**
**CH-4002 Basel(CH)**

(72) Erfinder: **Spivack, John D.**
**1 Blue Jay Street**
**Spring Valley New York 10977(US)**
Erfinder: **Steinberg, David H.**
**2216 Wilson Avenue**
**New York New York 10469(US)**
Erfinder: **Odorisio, Paul**
**31 Columbia Terrace**
**Edgewater New York 07020(US)**

**EP 0 249 577 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Langketten-(4-Hydroxyphenyl)propionat-Derivate, deren Verwendung als Stabilisatoren sowie das damit stabilisierte organische Material.

Organische polymere Verbindungen wie Kunststoffe und Harze unterliegen dem thermischen, oxidativen und lichtinduzierten Abbau. Eine grosse Vielfalt von Stabilisatoren ist in der Technik zur Stabilisierung einer Vielzahl von Substraten bekannt. Die Wirksamkeit eines Stabilisators hängt von dem stabilisierten Substrat und den Ursachen für dessen Abbau ab. Im allgemeinen ist es schwierig vorauszusagen, welcher Stabilisator der wirksamste und ökonomischste für ein bestimmtes Anwendungsgebiet ist. Beispielsweise kann die Wirksamkeit eines Stabilisators zur Reduktion der Flüchtigkeit einer Verbindung von der Verhinderung der Bindungsspaltung im Substratmolekül abhängen. Um geringe Versprödung und die Erhaltung der Elastizität in einem Polymeren oder Elastomeren zu bewirken, muss ein Stabilisator übermässige Vernetzung und/oder Kettenbruch verhindern. Die Vermeidung der Vergilbung eines Materials bedingt, dass keine Reaktionen ablaufen, die zu neuen Chromophoren oder Farbkörpern im Substrat oder im Stabilisator führen. Ferner sind die Probleme der Verarbeitungsstabilität und der Substratverträglichkeit zu beachten.

(4-Hydroxy-5-alkylphenyl)-alkansäureester sind als wirksame und kommerziell eingesetzte Stabilisatoren für organisches Material bekannt. Zum Beispiel werden typische Ester in den US-A 3,285,855; 3,330,859; 3,644,482; 4,417,071 und 4,444,676 sowie in der DE-A 2,147,544 beschrieben. Dabei ist zu beachten, dass die Estergruppen in den verschiedenen beschriebenen Substanzen nie mehr als 30 C-Atome aufweisen; dieser Maximalwert ist generisch in der US-A 3,330,859 beschrieben.

Ueberraschend wurde gefunden, dass (4-Hydroxyphenyl)-alkansäureester mit längerkettigen Alkylgruppen in der Esterkomponente eine Anzahl von verbesserten Eigenschaften aufweisen, die diese Alkansäureester zu besonders geeigneten Stabilisatoren für organisches Material machen.

Im speziellen verleihen diese Verbindungen Polyolefinen unerwartete Langzeit-Hitzestabilisierung. Sie schützen auch verschiedene Substrate wie z.B. Polyolefine, Elastomere und Schmieröle gegen die nachteiligen Auswirkungen des oxidativen und thermischen Abbaus. Zusätzlich zeigen sie eine niedrige Flüchtigkeit, was den Vorteil beinhaltet, dass kaum Ausschwitzen aus den polymeren Substraten während der Verarbeitung und dem Aussetzen in der Wärme auftritt.

Die vorliegende Erfindung betrifft eine Verbindung der allgemeinen Formel I

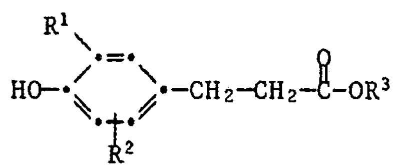

(I)

worin $R^1$ und $R^2$ unabhängig voneinander $C_1$-$C_{18}$ Alkyl, Cyclopentyl, Cyclohexyl, Phenyl, durch $C_1$-$C_{18}$ Alkyl substituiertes Phenyl, $C_7$-$C_9$ Aralkyl oder durch $C_1$-$C_{18}$ Alkyl substituiertes $C_7$-$C_9$ Aralkyl und $R^3$ $C_{35}$-$C_{50}$ Alkyl oder Gemische davon bedeuten.

Sind $R^1$, $R^2$ oder die Substituenten des Phenyl- oder Aralkylrestes $C_1$-$C_{18}$ Alkyl, so handelt es sich um geradkettige oder verzweigte Alkylreste, wie z.B. Methyl, Ethyl, Propyl, Isopropyl, n-Butyl, sec.-Butyl, tert.-Butyl, geradkettiges oder verzweigtes Pentyl, Hexyl, Heptyl, Octyl, Nonyl, Decyl, Undecyl, Dodecyl, Tridecyl, Tetradecyl, Pentadecyl, Hexadecyl, Heptadecyl oder Octadecyl.

Bedeuten $R^1$ und $R^2$ $C_7$-$C_9$ Aralkyl, so handelt es sich beispielsweise um Benzyl, α-Methylbenzyl, 2-Phenylethyl, α,α-Dimethylbenzyl oder 3-Phenylpropyl.

Bedeuten $R^1$ und $R^2$ durch $C_1$-$C_{18}$ Alkyl substituiertes Phenyl, so handelt es sich z.B. um Tolyl, Mesityl oder Xylyl.

Bedeutet $R^3$ $C_{35}$-$C_{50}$ Alkyl, so handelt es sich um geradkettiges oder verzweigtes Alkyl, wie z.B. Pentatriacontyl, Hexatriacontyl, Octatriacontyl, Tetracontyl, Tetratetracontyl oder Pentacontyl.

Bevorzugt bedeuten $R^1$ und $R^2$ geradkettiges oder verzweigtes $C_1$-$C_8$ Alkyl wie z.B. Methyl, n-Butyl, sec.-Butyl, tert.-Butyl, tert.-Pentyl, n-Octyl, 2-Ethylhexyl oder tert.-Octyl; speziell bevorzugt jedoch $C_4$-$C_8$ Alkyl, insbesondere bevorzugt tert.-Butyl, tert.-Pentyl und tert.-Octyl.

Weiter bevorzugt ist für $R^2$ die Ortho-Stellung zur Hydroxylgruppe im Phenylring, insbesondere wenn es sich bei $R^2$ um tert.-Alkyl handelt.

Ebenfalls bevorzugt als $R^1$ und $R^2$ sind Cyclohexyl, Benzyl, α-Methylbenzyl und α,α-Dimethylbenzyl.

$R^3$ bedeutet bevorzugt geradkettiges $C_{35}$-, $C_{40}$- und $C_{50}$-Alkyl sowie die Gemische aus $C_{35}$-$C_{40}$ Alkyl und $C_{45}$-$C_{50}$ Alkyl.

Die Substanzen der vorliegenden Erfindung können z.B. nach den in der US-A 3,330,859 beschriebenen Verfahren hergestellt werden. Vorzugsweise umfasst das Verfahren zur Herstellung der gewünschten Verbindung die Umsetzung des entsprechend substituierten (4-Hydroxy-phenyl)propionsäuremethylesters mit dem entsprechenden primären Alkohol bei einer Temperatur von 80 bis 200 °C, bevorzugt bei 125 bis 175 °C. Typische Alkohole sind z.B. Pentatriacontanol, Tetracontanol, Pentacontanol oder Alkoholgemische, welche langkettige Alkylgruppen, wie z.B. $C_{35}$-$C_{40}$ Alkyl oder $C_{45}$-$C_{50}$ Alkyl, aufweisen.

Die Reaktion wird vorzugsweise in der Anwesenheit eines Protonenakzeptors wie Metallhydride, wie z.B. Natriumhydrid, Lithiumhydrid, Calciumhydrid oder Kaliumhydrid; der entsprechenden Amide; oder Metallalkoxide, wie z.B. Natriummethoxid, Natriumethoxid oder Kalium-tert.-butoxid durchgeführt. Die Ausgangsstoffe zur Herstellung der erfindungsgemässen Stabilisatoren sind kommerziell erhältlich oder lassen sich durch bekannte Verfahren herstellen.

Die Verbindungen der vorliegenden Erfindung sind hervorragende Stabilisatoren für organisches Material, das dem oxidativen, thermischen oder lichtinduzierten Abbau unterliegt, wie z.B. Kunststoffe, Polymere und Harze.

Demgemäss betrifft die vorliegende Erfindung auch eine Zusammensetzung enthaltend ein organisches Material, das dem oxidativen, thermischen oder lichtinduzierten Abbau unterliegt, und eine stabilisierend wirksame Menge einer Verbindung der Formel I.

Die erfindungsgemässen Verbindungen sind besonders bevorzugte Stabilisatoren für synthetische Polymere wie polyolefinische Substrate, wie Polyethylen und Polypropylen; Polystyrol, einschliesslich schlagfestes Polystyrol; Acrylnitril/Butadien/Styrol-Harz, Styrol/Butadien-Kautschuk, Polyisopren und Naturkautschuk; Polyester einschliesslich Polyethylenterephthalat und Polybutylenterephthalat, einschliesslich Copolymere sowie Schmieröle auf Mineralöl-Basis.

Generell kann man die Stabilisatoren für folgende polymere Substrate verwenden:

1. Polymere von Mono- und Diolefinen, beispielsweise Polypropylen, Polyisobutylen, Polybuten-1, Polymethylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE).

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere und LLDPE/Ethylen-Acrylsäure-Copolymere.

3a. Kohlenwasserstoffharze (z.B. $C_5$-$C_9$) inklusive hydrierte Modifikationen davon (z.B. Klebrigmacherharze).

4. Polystyrol, Poly-(p-methylstyrol), Poly-(α-methylstyrol).

5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

6. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf

Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z.B. als sogenannte ABS-, MBS-, ASA- oder AES-Polymere bekannt sind.

7. Halogenhaltige Polymere, wie z.B. Polychloropren, Chlorkautschuk, chloriertes oder chlorsulfoniertes Polyethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

8. Polymere, die sich von $\alpha,\beta$-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

10. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

11. Homo- und Copolymere von cyclischen Ethern, wie Polyalkylenglykole, Polyethylenoxyd, Polypropylenoxyd oder deren Copolymere mit Bisglycidylethern.

12. Polyacetale, wie Polyoxymethylen, sowie solche Polyoxymethylene, die Comonomere, wie z.B. Ethylenoxid, enthalten; Polyacetale, die mit termoplastischen Polyurethanen, Acrylaten oder MBS modifiziert sind.

13. Polyphenylenoxide und -sulfide und deren Mischungen mit Styrolpolymeren oder Polyamiden.

14. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid, Poly-m-phenylen-isophthalamid. Block-Copolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

16. Polyharnstoffe, Polyimide, Polyamid-imide und Polybenzimidazole.

17. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

18. Polycarbonate und Polyestercarbonate.

19. Polysulfone, Polyethersulfone und Polyetherketone.

20. Vernetzte Polymer, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht-trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten, wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidylethern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether,

wie Methylcellulose; sowie Kolophoniumharze und Derivate.

27. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.

28. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.

29. Wässrige Emulsionen natürlicher oder synthetischer Kautschuke, wie z.B. Naturkautschuk-Latex oder Latices von carboxylierten Styrol-Butadien-Copolymeren.

Die erfindungsgemässen Verbindungen werden in Mengen von 0.01 bis 5 Gew.-% bezogen auf das stabilisierte Material eingesetzt. Je nach Verwendung und Substrat wird die Stabilisatormenge variiert. Bevorzugt verwendet man 0.05 bis 2 Gew.-% des Stabilisators, besonders bevorzugt 0.1 bis 1 Gew.-%.

Die Einarbeitung der erfindungsgemässen Stabilisatoren in die organischen Polymeren kann nach den in der Technik üblichen Methoden jederzeit vor der Formgebung erfolgen. Beispielsweise kann der Stabilisator mit dem Polymeren in trockener Form gemischt werden, oder als suspendierte oder emulgierte Verbindung mit einer Lösung, Suspension oder Emulsion des Polymeren gemischt werden.

Die so durch die erfindungsgemässen Verbindungen stabilisierten Polymerzusammensetzungen können zusätzlich auch weitere übliche Additive enthalten, wie beispielsweise:

1. Antioxidantien

1.1. Alkylierte Monophenole, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert.butyl-4-methoxymethylphenol, 2,6-Di-nonyl-4-methylphenol.

1.2. Alkylierte Hydrochinone, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenol.

1.3. Hydroxylierte Thiodiphenylether, z.B. 2,2′-Thio-bis-(6-tert.-butyl-4-methylphenol), 2,2′-Thio-bis-(4-octylphenol), 4,4′-Thio-bis-(6-tert.butyl-3-methylphenol), 4,4′-Thio-bis-(6-tert.butyl-2-methylphenol).

1.4. Alkyliden-Bisphenole, z.B. 2,2′-Methylen-bis-(6-tert.butyl-4-methylphenol), 2,2′-Methylen-bis-(6-tert.butyl-4-ethylphenol), 2,2′-Methylen-bis-[4-methyl-6-(α-methylcyclohexyl)-phenol], 2,2′-Methylen-bis-(4-methyl-6-cyclohexylphenol), 2,2′-Methylen-bis-(6-nonyl-4-methylphenol), 2,2′-Methylen-bis-(4,6-di-tert.butylphenol), 2,2′-Ethyliden-bis-(4,6-di-tert.butylphenol), 2,2′-Ethyliden-bis-(6-tert.butyl-4-isobutylphenol), 2,2′-Methylen-bis-[6-(α-methylbenzyl)-4-nonylphenol], 2,2′-Methylen-bis-[6-(α,α-dimethylbenzyl)-4-nonylphenol], 4,4′-Methylen-bis-(2,6-di-tert.butylphenol), 4,4′-Methylen-bis-(6-tert.butyl-2-methylphenol), 1,1-Bis-(5-tert.-butyl-4-hydroxy-2-methylphenyl)-butan, 2,6-Bis-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3′-tert.butyl-4′-hydroxyphenyl)-butyrat], Bis-(3-tert.butyl-4-hydroxy-5-methylphenyl)-dicyclopentadien, Bis-[2-(3′-tert.butyl-2′-hydroxy-5′-methyl-benzyl)-6-tert.butyl-4-methyl-phenyl]-terephthalat.

1.5 Benzylverbindungen, z.B. 1,3,5-Tris-(3,5-di-tert.butyl-4-hydroxybenzyl)-2,4,6-trimethylbenzol, Bis-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, Ca-Salz des 3,5-Di-tert.butyl-4-hydroxybenzyl-phosphonsäure-monoethylester, 1,3,5-Tris-(3,5-dicyclohexyl-4-hydroxybenzyl)isocyanurat.

1.6. Acylaminophenole, z.B. 4-Hydroxy-laurinsäureanilid, 4-Hydroxy-stearinsäureanilid, 2,4-Bis-(octylmercapto)-6-(3,5-di-tert.-butyl-4-hydroxyanilino)-s-triazin, N-(3,5-di-tert.butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxyethyl)-isocyanurat, N,N′-Bis-(hydroxyethyl)-oxalsäurediamid.

1.8. Ester der β-(5-tert.Butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)-ethyl-isocyanurat, N,N′-Bis-(hydroxyethyl)-oxalsäuredia-

mid.

1.9. Ester der β-(3,5-Dicyclohexyl-4-hydroxyphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid.

1.10. Amide der β-(3,5-Di-tert.butyl-4-hydroxyphenyl)-propionsäure, wie z.B. N,N'-Bis-(3,5-di-tert.butyl-4-hydroxyphenylpropionyl)-hexamethylendiamin, N,N'-Bis-(3,5-di-tert.butyl-4-hydroxyphenylpropionyl)-trimethylendiamin, N,N'-Bis-(3,5-di-tert.butyl-4-hydroxyphenylpropionyl)-hydrazin.

2. UV-Absorber und Lichtschutzmittel

2.1. 2-(2'-Hydroxyphenyl)-benztriazole, wie z.B. das 5'-Methyl-, 3',5'-Di-tert.butyl-, 5'-tert.Butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl, 4'-Octoxy-, 3',5'-Di-tert.amyl-, 3',5'-Bis-(α,α-dimethylbenzyl)-Derivat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert.Butyl-phenylsalicylat, Phenylsalicylat, Octylphenyl-salicylat, Dibenzoylresorcin, Bis-(4-tert.butylbenzoyl)-resorcin, Benzoylresorcin, 3,5-Di-tert.butyl-4-hydroxybenzoesäure-2,4-di-tert.-butylphenylester, 3,5-Di-tert.butyl-4-hydroxybenzoesäurehexadecylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert.butylbenzylphosphonsäure-monoalkylestern, wie vom Methyl- oder Ethylester, Nickelkomplexe von Ketoximen, wie von 2-Hydroxy-4-methyl-phenyl-undecylketonoxim, Nickelkomplexe des 1-Phenyl-4-lauroyl-5-hydroxypyrazols, gegebenenfalls mit zusätzlichen Liganden.

2.6. Sterisch gehinderte Amine, wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon).

2.7. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-di-methylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid, Gemische von o-und p-Methoxy- sowie von o- und p-Ethoxy-di-substituierten Oxaniliden.

3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert.butyl-4-hydroxyphenylpropionyl)-hydrazin, 3-Salicyloylamino-1,2,4-triazol, Bis-(benzyliden)-oxalsäuredihydrazid.

4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy)-2,4,8,10-tetraoxa-3,9-diphosphaspiro[5.5]undecan.

5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Die nachfolgenden Beispiele erläutern die Erfindung näher. Teile und Prozente sind Gewichtsteile und Gewichtsprozente, sofern nichts anderes angegeben ist.

Beispiel 1 3-(3,5-Di-tert.-butyl-4-hydroxyphenyl)propionsäure($C_{35}$-$C_{40}$-Mischalkyl)ester.

Ein Gemisch aus 14,62 g (0.05 Mol) 3-(3,5-Di-tert.-butyl-4-hydroxyphenyl)propionsäuremethylester, 33 g (0.05 Mol) polymerer Alkohol (Aequivalenzgewicht 660,15; durchschnittliche C-Kettenlänge 38) und 0,04 g (0.05 Mol) Lithiumhydrid wird in einem mit einer Dean-Stark®-Falle versehenen Reaktionsgefäss auf 125-150° C aufgeheizt. Die Reaktion gilt dann als beendet, sobald 2,1 ml (0.05 Mol) Methanol in der Kühlfalle aufgefangen ist. Der neutralisierte Reaktionsrückstand wird in heissem Methanol zerrieben und ergibt 11 g (23 % Ausbeute) eines weissen Pulvers mit Smp. 59-65° C.

Beispiel 2 3-(3,5-Di-tert.-butyl-4-hydroxyphenyl)propionsäure-($C_{45}$-$C_{50}$-Mischalkyl)ester.

Die Methode von Beispiel 1 wird mit einem Gemisch aus 14,62 g (0.05 Mol) 3-(3,5-Di-tert.-butyl-4-hydroxyphenyl)propionsäuremethylester, 42 g (0.05 Mol) polymerer Alkohol (Aequivalenzgewicht 850,2; durchschnittliche C-Kettenlänge 49) und 0,04 g (0.05 Mol) Lithiumhydrid wiederholt. Der neutralisierte Reaktionsrückstand wird in heissem Methanol zerrieben und ergibt 23 g (42 % Ausbeute) weissliches Pulver mit Smp. 61-70° C.

Beispiel 3

Die Oxidationsstabilität von Walz-Polypropylen-Proben, die die erfindungsgemässen Stabilisatoren allein und zusammen mit einem Thiosynergisten enthalten, wird an 0,635 mm dicken Plättchen im Umluftofen bei 150° C gemessen. Die Plättchen werden solange der Heissluft ausgesetzt, bis sie die ersten Zeichen von Zersetzung wie z.B. Rissbildung oder braune Kanten aufweisen. Gemessen wird die Zeit bis zum Auftreten solcher Zersetzungszeichen.

Die Resultate sind in Tabelle 1 wiedergegeben:

Tabelle 1

| Additiv aus Beispiel | DSTDP 0,3 % | Additiv Konzentration [%] | Oxidationsstabilität Zeit bis zur Zersetzung |
|---|---|---|---|
| - | - | - | < 20 Std. |
| - | + | - | < 20 Std. |
| 1 | - | 0.2 | 170 Std. |
| 1 | + | 0.1 | 1210 Std. |
| 2 | - | 0.2 | 170 Std. |
| 2 | + | 0.1 | 1300 Std. |

DSTDP = Distearylthiodipropionat (Thiosynergist)
PP = Polypropylen

Beispiel 4

Die Oxidationsstabilität von Walz-Polypropylen-Proben, die die erfindungsgemässen Stabilisatoren enthalten, wird an gestreckten Bändern von 0,05 mm Dicke im Umluftofen bei 115° C gemessen. Die Bänder werden solange der Heissluft ausgesetzt, bis sie die ersten Zeichen von Zersetzung wie z.B. Versprödung auftreten (Zersetzungszeitpunkt). Gemessen wird die Zeit bis zum Zersetzungszeitpunkt.

Die Resultate sind in Tabelle 2 wiedergegeben:

Tabelle 2

| Additiv aus Beispiel | Additiv Konzentration [%] | Oxidationsstabilität Zeit bis zum Zersetzungszeitpunkt [Std.] |
|---|---|---|
| - | - | 96 - 165 |
| 1 | 0,2 | 970 |
| 2 | 0.2 | 1130 |

Die angegebenen Werte der Beispiele 3 und 4 zeigen das Stabilisierungsvermögen der erfindungsgemässen Verbindungen.

**Patentansprüche**

**1.** Verbindung der allgemeinen Formel I,

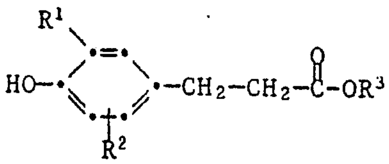

(I)

worin $R^1$ und $R^2$ unabhängig voneinander $C_1$-$C_{18}$ Alkyl, Cyclopentyl, Cyclohexyl, Phenyl, durch $C_1$-$C_{18}$ Alkyl substituiertes Phenyl, $C_7$-$C_9$ Aralkyl oder durch $C_1$-$C_{18}$ Alkyl substituiertes $C_7$-$C_9$ Aralkyl und $R^3$ $C_{35}$-$C_{50}$ Alkyl oder Gemische davon bedeuten.

**2.** Verbindung gemäss Anspruch 1, worin $R^1$ $C_1$-$C_8$ Alkyl bedeutet.

**3.** Verbindung gemäss Anspruch 2, worin $R^1$ $C_4$-$C_8$ Alkyl bedeutet.

**4.** Verbindung gemäss Anspruch 3, worin $R^1$ tert.-Butyl, tert.-Pentyl oder tert.-Octyl bedeutet.

**5.** Verbindung gemäss Anspruch 1, worin sich $R^2$ in Ortho-Stellung zur Hydroxylgruppe im Phenylring befindet.

**6.** Verbindung gemäss Anspruch 1, worin $R^2$ $C_4$-$C_8$ tert.-Alkyl bedeutet.

**7.** Verbindung gemäss Anspruch 1, worin $R^3$ geradkettiges $C_{35}$, $C_{40}$ und $C_{50}$ Alkyl sowie Gemische aus $C_{35}$-$C_{40}$ Alkyl und $C_{45}$-$C_{50}$ Alkyl bedeutet.

**8.** 3-(3,5-Di-tert.-butyl-4-hydroxyphenyl)propionsäure-($C_{35}$-$C_{40}$-Mischalkyl)ester gemäss Anspruch 7.

**9.** 3-(3,5-Di-tert.-butyl-4-hydroxyphenyl)propionsäure-($C_{45}$-$C_{50}$-Mischalkyl)ester gemäss Anspruch 7.

**10.** Zusammensetzung enthaltend ein organisches Material, das dem oxidativen, thermischen oder lichtinduzierten Abbau unterliegt, und eine stabilisierend wirksame Menge einer Verbindung der Formel I.

**11.** Zusammensetzung gemäss Anspruch 10, worin das organische Material ein synthetisches Polymer ist.

**12.** Zusammensetzung gemäss Anspruch 11, worin das synthetische Polymer ein Polyolefin-Homopolymer oder -Copolymer ist.

**13.** Verwendung der Verbindungen der Formel I zur Stabilisierung von organischem Material gegen oxidativen, thermischen oder lichtinduzierten Abbau.

**Claims**

1. A compound of the general formula I

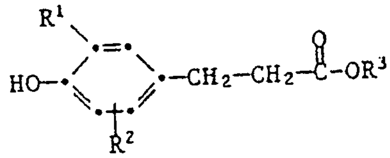

(I)

in which $R^1$ and $R^2$ are independently of one another $C_1$-$C_{18}$alkyl, cyclopentyl, cyclohexyl, phenyl, phenyl substituted by $C_1$-$C_{18}$alkyl, $C_7$-$C_9$-aralkyl which is unsubstituted or substituted by $C_1$-$C_{18}$alkyl and $R^3$ is $C_{35}$-$C_{50}$alkyl or mixtures thereof.

2. A compound according to claim 1 in which $R^1$ is $C_1$-$C_8$alkyl.

3. A compound according to claim 2 in which $R^1$ is $C_4$-$C_8$alkyl.

4. A compound according to claim 3 in which $R^1$ is tert-butyl, tert-pentyl or tert-octyl.

5. A compound according to claim 1 in which $R^2$ is in the ortho position to the hydroxyl group in the phenyl ring.

6. A compound according to claim 1 in which $R^2$ is tert-$C_4$-$C_8$alkyl.

7. A compound according to claim 1 in which $R^3$ is straight-chain $C_{35}$, $C_{40}$ or $C_{50}$alkyl or $C_{35}$–$C_{40}$ and/or $C_{45}$-$C_{50}$ mixed alkyl.

8. A ($C_{35}$-$C_{40}$) mixed alkyl ester of 3-(3,5-di-tert-butyl-4-hydroxyphenyl)propanoic acid according to claim 7.

9. A ($C_{45}$-$C_{50}$) mixed alkyl ester of 3-(3,5-di-tert-butyl-4-hydroxyphenyl)propanoic acid according to claim 7.

10. A composition containing an organic material subject to oxidative, thermal or light-induced degradation and an effective stabilizing amount of a compound of the formula I.

11. A composition according to claim 10, in which the organic material is a synthetic polymer.

12. A composition according to claim 11, in which the synthetic polymer is a polyolefin homopolymer or copolymer.

13. The use of a compound of the formula I for stabilizing organic material against oxidative, thermal or light-induced degradation.

## Revendications

1. Composés de formule générale I ci-dessous

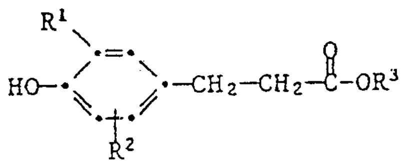

I

dans laquelle $R^1$ et $R^2$ représentent chacun, indépendamment l'un de l'autre, un alkyle en $C_1$-$C_{18}$, le groupe cyclopentyle, cyclohexyle ou phényle, un phényle ayant éventuellement comme substituant un alkyle en $C_1$-$C_{18}$, ou un aralkyle en $C_7$-$C_9$ ayant éventuellement comme substituant un alkyle $C_1$-$C_{18}$,

et $R^3$ représente un alkyle en $C_{35}$-$C_{50}$, ou plusieurs de tels alkyles.

**2.** Composé selon la revendication 1 dans lequel $R^1$ est un alkyle en $C_1$-$C_8$.

**3.** Composé selon la revendication 2 dans lequel $R^1$ est un alkyle en $C_4$-$C_8$.

**4.** Composé selon la revendication 3 dans lequel $R^1$ est le groupe tert-butyle, tert-pentyle ou tert-octyle.

**5.** Composé selon la revendication 1 dans lequel $R^2$ est en position ortho par rapport à l'hydroxyle sur le cycle phénylique.

**6.** Composé selon la revendication 1 dans lequel $R^2$ est un alkyle tertiaire en $C_4$-$C_8$.

**7.** Composé selon la revendication 1 dans lequel $R^3$ représente un alkyle linéaire en $C_{35}$, $C_{40}$ ou $C_{50}$ ou bien plusieurs alkyles en $C_{35}$-$C_{40}$ et $C_{45}$-$C_{50}$.

**8.** 3-(3,5-di-tert-butyl-4-hydroxyphényl)propionate de plusieurs alkyles en $C_{35}$-$C_{40}$, selon la revendication 7.

**9.** 3-(3,5-di-tert-butyl-4-hydroxyphényl)propionate de plusieurs alkyles en $C_{45}$-$C_{50}$, selon la revendication 7.

**10.** Composition comprenant une matière organique sujette à se dégrader sous l'action de la chaleur ou de la lumière ou par oxydation, avec une proportion stabilisante d'un composé de formule I selon la revendication 1.

**11.** Composition selon la revendication 10 dont la matière organique est une matière polymère synthétique.

**12.** Composition selon la revendication 11 dont le polymère synthétique est un monopolymère ou un copolymère d'oléfines.

**13.** L'emploi des composés de formule I selon la revendication 1 pour stabiliser et protéger des matières organiques contre les dégradations sous les effets de la chaleur, de la lumière ou de l'oxydation.